# EUROPEAN PATENT APPLICATION

(11) **EP 4 177 051 A1**
(43) Date of publication of application: **10.05.2023**
(21) Application number: 21837060.9
(22) Date of filing: 05.07.2021
(51) Int. Cl.: B32B 9/00, B32B 9/04, B32B 27/40, C09D 175/04, B32B 7/12

(54) **COATING COMPOSITION AND MULTILAYER BODY**

(30) Priority: 06.07.2020 JP 2020116108
(71) Applicant: Mitsui Chemicals, Inc., Tokyo 104-0028 (JP)
(72) Inventor: MIYANAGA, Tomoharu, Sodegaura-shi, Chiba 299-0265 (JP); MURAKAMI, Tsukasa, Sodegaura-shi, Chiba 299-0265 (JP); FUKUDA, Kazuyuki, Sodegaura-shi, Chiba 299-0265 (JP); UCHIDA,Takashi, Tokyo 105-7122 (JP); YOSHIMURA, Toshihiro, Tokyo 105-7122 (JP)
(74) Representative: Hoffmann Eitle
(86) International application number: PCT/JP2021/025283
(87) International publication number: WO 2022/009829

(57) **Abstract**

A coating composition includes a polyisocyanate component and a polyol component. The polyisocyanate component includes an aromatic ring-containing isocyanate. The polyol component includes an acrylic polyol. The acrylic polyol is a polymer of a monomer composition containing a hydroxyl group-containing polymerizable monomer and a carboxyl group-containing polymerizable monomer and containing no (meth)acrylonitrile.

## Description

### TECHNICAL FIELD

The present invention relates to a coating composition and a laminate.

### BACKGROUND ART

Conventionally, various functions such as gas barrier properties and retort resistance (hot water resistance) have been required in the fields of various packaging materials. Accordingly, as a packaging material, for example, a laminate obtained by laminating a plurality of films having various functions has been used.

As a laminate, more specifically, for example, a laminate including a substrate, a resin coating film obtained from a primer, an ink layer, an adhesive layer, and a sealant layer has been proposed. Further, as the primer which forms the resin coating film, for example, a primer obtained by copolymerizing methyl methacrylate (MMA), acrylonitrile (AN), β-hydroxyethyl methacrylate (β-HEMA), styrene (St), butyl acrylate (BA), and methacrylic acid (MAA) to prepare a main agent solution, and blending a trimethylolpropane adduct (XDI-TMP) of a xylylene diisocyanate as a curing agent into the obtained main agent solution has been proposed (ref: for example, Patent Document 1 (Primer 4 of Comparative Example)).

It has also been proposed that a 5-(1,5-dioxotetrahydro-3-furanyl)-3-methyl-3-cyclohexane-1,2-dicarboxylic acid anhydride is further blended into the above-described primer (ref: for example, Patent Document 1 (Primer 4 of Example)).

Furthermore, in the above-described primer, it has also been proposed that a mixed solvent of methyl ethyl ketone, ethyl acetate, and propylene glycol monomethyl ether is used as a solvent (ref: for example, Patent Document 1 (Examples and Comparative Examples)).

### Citation List

### Patent Document

Patent Document 1: International Patent Publication No. WO2010/038643

### SUMMARY OF THE INVENTION

### PROBLEM TO BE SOLVED BY THE INVENTION

On the other hand, in the coating field, it is required to use an alkyl ester alone as a solvent in order to improve handleability and workability.

However, since the above-described primer has insufficient solubility with respect to the alkyl ester, a mixed solvent containing the alkyl ester and another solvent is used as a solvent, which is inferior in the handleability and the workability.

Further, a laminate obtained using such a primer is required to further improve gas barrier properties and retort resistance (hot water resistance).

The present invention provides a coating composition capable of efficiently obtaining a laminate having excellent handleability and workability, and also having excellent gas barrier properties and retort resistance (hot water resistance), and a laminate obtained using the coating composition.

### MEANS FOR SOLVING THE PROBLEM

The present invention [1] includes a coating composition including a polyisocyanate component and a polyol component, wherein the polyisocyanate component includes an aromatic ring-containing isocyanate, the polyol component includes an acrylic polyol, and the acrylic polyol is a polymer of a monomer composition containing a hydroxyl group-containing polymerizable monomer and a carboxyl group-containing polymerizable monomer and containing no (meth)acrylonitrile.

The present invention [2] includes the coating composition described in the above-described [1], wherein the aromatic ring-containing isocyanate includes a xylylene diisocyanate and/or a derivative thereof.

The present invention [3] includes the coating composition described in the above-described [1] or [2], wherein the monomer composition includes an aromatic vinyl monomer.

The present invention [4] includes the coating composition described in any one of the above-described [1] to [3], wherein an equivalent ratio (NCO/OH) of isocyanate groups of the polyisocyanate component to hydroxyl groups of the polyol component is 1.2 or more and 6.0 or less.

The present invention [5] includes the coating composition described in any one of the above-described [1] to [4], wherein in the monomer composition, a mass ratio (carboxy group-containing monomer/hydroxyl group-containing monomer) of the carboxy group-containing monomer content to the hydroxyl group-containing monomer content is 0.03 or more and 0.1 or less.

The present invention [6] includes the coating composition described in any one of the above-described [1] to [5], wherein a content ratio of the carboxy group-containing monomer is 0.1 parts by mass or more and 5.0 parts by mass or less with respect to 100 parts by mass of the total amount of the monomer composition.

The present invention [7] includes the coating composition described in any one of the above-described [1] to [6], wherein a glass transition temperature of the acrylic polyol is -25°C or more and 80°C or less.

The present invention [7] includes the coating composition described in any one of the above-described [1] to [6], wherein a number average molecular weight of the acrylic polyol is 6000 or more.

The present invention [8] includes a laminate including a resin film, an inorganic thin film layer disposed on one side in a thickness direction of the resin film, a polyurethane layer disposed on one side in the thickness direction of the inorganic thin film layer, an adhesive layer disposed on one side in the thickness direction of the polyurethane layer, and a sealant layer disposed on one side in the thickness direction of the adhesive layer, wherein the polyurethane layer includes a cured product of the coating composition described in any one of the above-described [1] to [7].

The present invention [9] includes the laminate described in the above-described [8], wherein the inorganic thin film layer includes aluminum oxide and/or silicon oxide.

The present invention [10] includes the laminate described in the above-described [8] or [9], wherein the resin film includes a polyester resin and/or a polyolefin resin.

### EFFECT OF THE INVENTION

In the coating composition of the present invention, the monomer composition which is a raw material of the acrylic polyol does not contain a (meth)acrylonitrile. Therefore, the coating composition of the present invention has excellent solubility with respect to an alkyl ester, and as a result, it has excellent handleability and workability.

Further, the coating composition of the present invention contains the aromatic ring-containing isocyanate as a polyisocyanate component. Further, the coating composition of the present invention contains the polymer of the monomer composition containing the hydroxyl group-containing polymerizable monomer and the carboxyl group-containing polymerizable monomer as an acrylic polyol.

Therefore, the coating composition of the present invention can obtain the laminate having excellent gas barrier properties and retort resistance (hot water resistance).

Since the laminate of the present invention is obtained using the above-described coating composition, it is obtained with excellent workability, and also has excellent gas barrier properties and retort resistance.

### BRIEF DESCRIPTION OF THE DRAWINGS

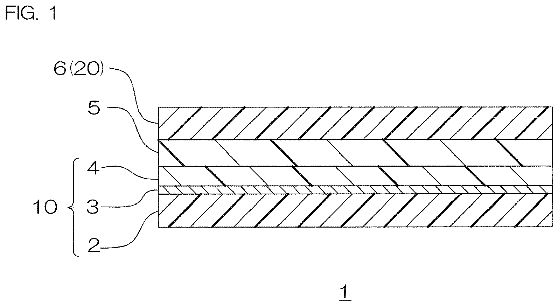

FIG. 1 shows a schematic configuration view illustrating one embodiment of a laminate of the present invention.

### DESCRIPTION OF EMBODIMENTS

A coating composition of the present invention contains a polyisocyanate component and a polyol component.

The polyisocyanate component contains an isocyanate compound as an active component.

The isocyanate compound contains an aromatic ring-containing isocyanate as an essential component.

The aromatic ring-containing isocyanate is a polyisocyanate containing an aromatic ring in a molecule skeleton.

Examples of the aromatic ring-containing isocyanate include an aromatic ring-containing isocyanate monomer and a derivative of an aromatic ring-containing isocyanate monomer (hereinafter, referred to as an aromatic ring-containing isocyanate derivative).

Examples of the aromatic ring-containing isocyanate monomer include aromatic polyisocyanates and araliphatic polyisocyanates.

Examples of the aromatic polyisocyanate include tolylene diisocyanate (TDI), diphenylmethane diisocyanate (MDI), toluidine diisocyanate (TODI), paraphenylene diisocyanate, and naphthalene diisocyanate (NDI), and preferably, tolylene diisocyanate (TDI) and diphenylmethane diisocyanate (MDI) are used. Examples of the tolylene diisocyanate include 2,4-tolylene diisocyanate and 2,6-tolylene diisocyanate. Examples of the diphenylmethane diisocyanate include 4,4'-diphenylmethane diisocyanate, 2,4'-diphenylmethane diisocyanate, and 2,2'-diphenylmethane diisocyanate.

Examples of the araliphatic polyisocyanate include xylylene diisocyanate (XDI) and tetramethylxylylene diisocyanate (TMXDI). Examples of the xylylene diisocyanate include 1,3-xylylene diisocyanate and 1,4-xylylene diisocyanate. Examples of the tetramethylxylylene diisocyanate include 1,3-tetramethylxylylene diisocyanate and 1,4-tetramethylxylylene diisocyanate.

These aromatic ring-containing isocyanate monomers may be used alone or in combination of two or more.

As the aromatic ring-containing isocyanate monomer, preferably, an aromatic polyisocyanate and an araliphatic polyisocyanate are used, more preferably, a tolylene diisocyanate and a xylylene diisocyanate are used, further more preferably, a xylylene diisocyanate is used.

An example of the aromatic ring-containing isocyanate derivative includes a modified product obtained by modifying the above-described aromatic ring-containing isocyanate monomer by a known method.

More specifically, examples of the aromatic ring-containing isocyanate derivative include multimers, allophanate modified products, polyol modified products, biuret modified products, urea modified products, oxadiazinetrione modified products, and carbodiimide modified products.

Examples of the multimer include dimers, trimers, pentamers, and heptamers. Further, examples of the trimer include isocyanurate modified products and iminooxadiazinedione modified products.

An example of the allophanate modified product includes an allophanate modified product generated by a reaction of the above-described aromatic ring-containing isocyanate monomer with a monohydric alcohol or a dihydric alcohol.

An example of the polyol modified product includes an alcohol adduct generated by a reaction of the above-described aromatic ring-containing isocyanate monomer with a trihydric or more alcohol.

An example of the biuret modified product includes a biuret modified product generated by a reaction of the above-described aromatic ring-containing isocyanate monomer with water and/or amines.

An example of the urea-modified product includes a urea-modified product generated by a reaction of the above-described aromatic ring-containing isocyanate monomer with a diamine.

An example of the oxadiazine trione modified product includes an oxadiazine trione modified product generated by a reaction of the above-described aromatic ring-containing isocyanate monomer with a carbon dioxide gas.

An example of the carbodiimide modified product includes a carbodiimide modified product generated by a decarboxylation condensation reaction of the above-described aromatic ring-containing isocyanate monomer.

Further, examples of the aromatic ring-containing isocyanate derivative include urethodione modified products, uretonimine modified products, and polymethylene polyphenylene polyisocyanate (crude MDI, polymeric MDI).

These aromatic ring-containing isocyanate derivatives may be used alone or in combination of two or more.

As the aromatic ring-containing isocyanate derivative, preferably, a derivative of a tolylene diisocyanate and a derivative of a xylylene diisocyanate are used, more preferably, a derivative of a xylylene diisocyanate is used, further more preferably, a derivative of a 1,3-xylylene diisocyanate is used.

Further, as the derivative, preferably, an isocyanurate modified product and a polyol modified product (alcohol adduct) are used, more preferably, a polyol modified product (alcohol adduct) is used, particularly preferably, a trimethylolpropane adduct is used.

These aromatic ring-containing isocyanates may be used alone or in combination of two or more.

As the aromatic ring-containing isocyanate, preferably, a xylylene diisocyanate and/or a derivative thereof are/is used, more preferably, a derivative of a xylylene diisocyanate is used, further more preferably, a polyol-modified product of a xylylene diisocyanate (alcohol adduct) is used, particularly preferably, a trimethylolpropane adduct of a xylylene diisocyanate is used.

In addition, the isocyanate compound may contain an aromatic ring-noncontaining isocyanate as an optional component as long as it does not damage the excellent effect of the present invention.

The aromatic ring-noncontaining isocyanate is a polyisocyanate containing no aromatic ring in a molecule skeleton.

Examples of the aromatic ring-noncontaining isocyanate include a monomer of an aromatic ring-noncontaining isocyanate and a derivative of a monomer of an aromatic ring-noncontaining isocyanate (hereinafter, referred to as an aromatic ring-noncontaining isocyanate derivative).

An example of the aromatic ring-noncontaining isocyanate monomer includes an aliphatic polyisocyanate.

Examples of the aliphatic polyisocyanate include ethylene diisocyanate, trimethylene diisocyanate, tetramethylene diisocyanate, pentamethylene diisocyanate (PDI), hexamethylene diisocyanate (HDI), octamethylene diisocyanate, nonamethylene diisocyanate, 2,2'-dimethylpentane diisocyanate, 2,2,4-trimethylhexane diisocyanate, decamethylene diisocyanate, butene diisocyanate, 1,3-butadiene-1,4-diisocyanate, 2,4,4-trimethylhexamethylene diisocyanate, 1,6,11-undecamethylene triisocyanate, 1,3,6-hexamethylene triisocyanate, 1,8-diisocyanate-4-isocyanatomethyloctane, 2,5,7-trimethyl-1,8-diisocyanate-5-isocyanatomethyloctane, bis(isocyanatoethyl)carbonate, bis(isocyanatoethyl)ether, 1,4-butylene glycol dipropyl ether-ω,ω'-diisocyanate, lysine isocyanatomethyl ester, lysine triisocyanate, 2-isocyanatoethyl-2,6-diisocyanatehexanoate, 2-isocyanatopropyl-2,6-diisocyanatehexanoate, bis(4-isocyanate-n-butylidene)pentaerythritol, and 2,6-diisocyanatemethylcaproate.

Further, an example of the aliphatic polyisocyanate includes an alicyclic polyisocyanate.

Examples of the alicyclic polyisocyanate include isophorone diisocyanate (IPDI), dicyclohexylmethane diisocyanate (H₁₂MDI), bis(isocyanatomethyl)cyclohexane (H₆XDI), 1,3-cyclohexane diisocyanate, 1,4-cyclohexane diisocyanate, 1,3-bis(isocyanatoethyl)cyclohexane, 1,4-bis(isocyanatoethyl)cyclohexane, methylcyclohexane diisocyanate, 2,2'-dimethyldicyclohexylmethane diisocyanate, dimer acid diisocyanate, 2,5-diisocyanatomethylbicyclo[2,2,1]-heptane, 2,6-diisocyanatomethylbicyclo[2,2,1]-heptane (NBDI), 2-isocyanatomethyl-2-(3-isocyanatopropyl)-5-isocyanatomethylbicyclo-[2,2,1]-heptane, 2-isocyanatomethyl-2-(3-isocyanatopropyl)-6-isocyanatomethylbicyclo-[2,2,1]-heptane, 2-isocyanatomethyl-3-(3-isocyanatopropyl)-5-(2-isocyanatoethyl)-bicyclo-[2,2,1]-heptane, 2-isocyanatomethyl-3-(3-isocyanatopropyl)-6-(2-isocyanatoethyl)-bicyclo-[2,2,1]-heptane, 2-isocyanatomethyl-2-(3-isocyanatopropyl)-5-(2-isocyanatoethyl)-bicyclo-[2,2,1]-heptane, and 2-isocyanatomethyl-2-(3-isocyanatopropyl)-6-(2-isocyanatoethyl)-bicyclo-[2,2,1]-heptane. Preferably, isophorone diisocyanate (IPDI), dicyclohexylmethane diisocyanate (H₁₂MDI), and bis(isocyanatomethyl)cyclohexane (H₆XDI) are used.

These aromatic ring-noncontaining isocyanate monomers may be used alone or in combination of two or more.

An example of the aromatic ring-noncontaining isocyanate derivative includes a modified product obtained by modifying the above-described aromatic ring-noncontaining isocyanate monomer by a known method in the same manner as in the aromatic ring-containing isocyanate derivative.

More specifically, examples of the aromatic ring-noncontaining isocyanate derivative include multimers, allophanate modified products, polyol modified products, biuret modified products, urea modified products, oxadiazinetrione modified products, and carbodiimide modified products.

These aromatic ring-noncontaining isocyanate derivatives may be used alone or in combination of two or more.

These aromatic ring-noncontaining isocyanates may be used alone or in combination of two or more.

A content ratio of the aromatic ring-noncontaining isocyanate is appropriately set in accordance with its purpose and application.

More specifically, the content ratio of the aromatic ring-noncontaining isocyanate is, for example, 30 parts by mass or less, preferably 20 parts by mass or less, more preferably 10 parts by mass or less, particularly preferably 0 parts by mass with respect to 100 parts by mass of the total amount of the polyisocyanate compound (aromatic ring-containing isocyanate and aromatic ring-noncontaining isocyanate) from the viewpoint of adhesion and gas barrier properties.

In other words, the content ratio of the aromatic ring-containing isocyanate is, for example, 70 parts by mass or more, preferably 80 parts by mass or more, more preferably 90 parts by mass or more, particularly preferably 100 parts by mass with respect to 100 parts by mass of the total amount of the polyisocyanate compound.

That is, the isocyanate compound preferably does not contain the aromatic ring-noncontaining isocyanate.

In other words, the isocyanate compound preferably contains only an aromatic ring-containing isocyanate, more preferably contains only an aromatic ring-containing isocyanate derivative, further more preferably contains only a derivative of a xylylene diisocyanate.

Further, the polyisocyanate component may contain an organic solvent.

In other words, the above-described isocyanate compound can be diluted with the organic solvent.

An example of the organic solvent includes an alkyl ester. Examples of the alkyl ester include methyl acetate, ethyl acetate, butyl acetate, and isobutyl acetate.

These organic solvents may be used alone or in combination of two or more.

As the organic solvent, preferably, an alkyl ester is used, more preferably, an ethyl acetate is used from the viewpoint of handleability and workability.

When the polyisocyanate component contains the isocyanate compound and the organic solvent, the solid content concentration is appropriately set in accordance with its purpose and application.

More specifically, the solid content concentration (content ratio of the isocyanate compound) of the polyisocyanate component is, for example, 5% by mass or more, preferably 10% by mass or more, and for example, 100% by mass or less, preferably 80% by mass or less.

The polyol component contains a polyol compound as an active component.

The polyol compound contains an acrylic polyol as an essential component.

The acrylic polyol is a macropolyol. The macropolyol is an organic compound having two or more hydroxyl groups and having a number average molecular weight of 400 or more, preferably 500 or more, and for example, 100000 or less.

The acrylic polyol is a polymer of a monomer composition containing a hydroxyl group-containing polymerizable monomer and a carboxyl group-containing polymerizable monomer and containing no (meth)acrylonitrile.

The (meth)acrylonitrile represents acrylonitrile and/or methacrylonitrile. Further, (meth)acryl represents acryl and/or methacryl. Further, (meth)acrylate represents acrylate and/or methacrylate.

When the monomer composition which is a raw material of the acrylic polyol does not contain the (meth)acrylonitrile, it is possible to improve solubility of the acrylic polyol with respect to the alkyl ester, and as a result, it is possible to obtain a coating composition having excellent handleability and workability.

Examples of the hydroxyl group-containing polymerizable monomer include 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate.

These hydroxyl group-containing polymerizable monomers may be used alone or in combination of two or more.

As the hydroxyl group-containing polymerizable monomer, from the viewpoint of gas barrier properties and retort resistance, preferably, 2-hydroxyethyl (meth)acrylate is used, more preferably, 2-hydroxyethylacrylate is used.

Examples of the carboxy group-containing polymerizable monomer include monocarboxylic acid, dicarboxylic acid, and salts of these. An example of the monocarboxylic acid includes (meth)acrylic acid. Further, examples of the dicarboxylic acid include itaconic acid, maleic acid, fumaric acid, itaconic anhydride, maleic anhydride, and fumaric anhydride.

These carboxy group-containing polymerizable monomers may be used alone or in combination of two or more.

As the carboxy group-containing polymerizable monomer, preferably, (meth)acrylic acid and itaconic acid are used, more preferably, (meth)acrylic acid is used, further more preferably, acrylic acid is used.

Further, the monomer composition may include a copolymerizable monomer copolymerizable with a hydroxyl group-containing polymerizable monomer and/or a carboxyl group-containing polymerizable monomer.

Examples of the copolymerizable monomer include a (meth)acrylate, an aromatic vinyl monomer, an amino group-containing polymerizable monomer, a glycidyl group-containing polymerizable monomer, a sulfonic acid group-containing polymerizable monomer, an acetoacetoxy group-containing polymerizable monomer, a phosphoric acid group-containing compound, vinyl esters, a heterocyclic vinyl compound, a vinylidene halide compound, α-olefins, and dienes.

An example of the (meth)acrylate includes an alkyl ester having 1 to 12 carbon atoms of a (meth)acrylic acid. More specifically, examples thereof include methyl (meth)acrylate, ethyl (meth)acrylate, isopropyl (meth)acrylate, n-butyl (meth)acrylate, isobutyl (meth)acrylate, t-butyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, cyclohexyl (meth)acrylate, phenyl (meth)acrylate, and benzyl (meth)acrylate.

These (meth)acrylates may be used alone or in combination of two or more.

As the (meth)acrylate, preferably, a methyl (meth)acrylate and an n-butyl (meth)acrylate are used, more preferably, a methyl methacrylate and an n-butyl acrylate are used.

Examples of the aromatic vinyl monomer include styrene and α-methylstyrene.

These aromatic vinyl monomers may be used alone or in combination of two or more.

As the aromatic vinyl monomer, preferably, styrene is used.

Examples of the amino group-containing polymerizable monomer include 2-aminoethyl (meth)acrylate, 2-(N-methylamino)ethyl (meth)acrylate, and 2-(N,N-dimethylamino)ethyl (meth)acrylate.

These amino group-containing polymerizable monomers may be used alone or in combination of two or more.

An example of the glycidyl group-containing polymerizable monomer includes a glycidyl (meth)acrylate.

These glycidyl group-containing polymerizable monomers may be used alone or in combination of two or more.

Examples of the sulfonic acid group-containing polymerizable monomer include allylsulfonate, methallylsulfonate, and acrylamide t-butylsulfonate. Further, examples of the salt thereof include alkali metal salts such as sodium salt and potassium salt, and ammonium salts of the above-described sulfonic acid group-containing polymerizable monomer. Specific examples thereof include sodium allylsulfonate, sodium methallylsulfonate, and ammonium methallylsulfonate.

These sulfonic acid-containing polymerizable monomers may be used alone or in combination of two or more.

An example of the acetoacetoxy group-containing polymerizable monomer includes acetoacetoxyethyl (meth)acrylate.

These acetoacetoxy group-containing polymerizable monomers may be used alone or in combination of two or more.

An example of the phosphoric acid group-containing compound includes 2-methacryloyloxyethyl acid phosphate.

These phosphoric acid group-containing compounds may be used alone or in combination of two or more.

Examples of the vinyl esters include vinyl acetate and vinyl propionate.

These vinyl esters may be used alone or in combination of two or more.

An example of the N-substituted unsaturated carboxylic acid amide includes N-methylol (meth)acrylamide.

These N-substituted unsaturated carboxylic acid amides may be used alone or in combination of two or more.

An example of the heterocyclic vinyl compound includes vinylpyrrolidone.

These heterocyclic vinyl compounds may be used alone or in combination of two or more.

Examples of the vinylidene halide compound include vinylidene chloride and vinylidene fluoride.

These vinylidene halide compounds may be used alone or in combination of two or more.

Examples of the α-olefins include ethylene and propylene.

These α-olefins may be used alone or in combination of two or more.

An example of the dienes includes butadiene.

These dienes may be used alone or in combination of two or more.

These copolymerizable monomers may be used alone or in combination of two or more.

As the copolymerizable monomer, preferably, a (meth)acrylate and an aromatic vinyl monomer are used.

In other words, the monomer composition preferably contains a hydroxyl group-containing polymerizable monomer, a carboxyl group-containing polymerizable monomer, and a (meth)acrylate and/or an aromatic vinyl monomer, more preferably contains a hydroxyl group-containing polymerizable monomer, a carboxyl group-containing polymerizable monomer, a (meth)acrylate, and an aromatic vinyl monomer.

In the monomer composition, the content ratio of the hydroxyl group-containing polymerizable monomer is, for example, 1 part by mass or more, preferably 5 parts by mass or more, more preferably 10 parts by mass or more, further more preferably 15 parts by mass or more with respect to 100 parts by mass of the total amount of the monomer composition from the viewpoint of adhesion and gas barrier properties of a polyurethane layer to be described later, and is, for example, 99.99 parts by mass or less, preferably 60 parts by mass or less, more preferably 40 parts by mass or less, further more preferably 23 parts by mass or less from the viewpoint of handleability of the acrylic polyol.

In addition, in the monomer composition, the content ratio of the carboxy group-containing polymerizable monomer is, for example, 0.01 parts by mass or more, preferably 0.1 parts by mass or more, more preferably 0.5 parts by mass or more, further more preferably 0.7 parts by mass or more, and for example, 99 parts by mass or less, preferably 5 parts by mass or less, more preferably 3 parts by mass or less, further more preferably 2 parts by mass or less with respect to 100 parts by mass of the total amount of the monomer composition from the viewpoint of gas barrier properties, retort resistance, handleability, and workability.

In addition, a mass ratio (carboxy group-containing monomer/hydroxyl group-containing monomer) of the carboxy group-containing monomer content to the hydroxyl group-containing monomer content is, for example, 0.01 or more, preferably 0.03 or more, and for example, 0.2 or less, preferably 0.1 or less from the viewpoint of handleability and workability.

In addition, when the monomer composition contains the (meth)acrylate, the content ratio of the (meth)acrylate is appropriately set so that a glass transition temperature of the acrylic polyol is within a range to be described later. For example, the content ratio (total amount) of the (meth)acrylate is, for example, 1 part by mass or more, preferably 5 parts by mass or more, and for example, 70 parts by mass or less, preferably 50 parts by mass or less with respect to 100 parts by mass of the total amount of the monomer composition from the viewpoint of blocking resistance and adhesion.

In addition, when the monomer composition contains the aromatic vinyl monomer, the content ratio of the aromatic vinyl monomer is appropriately set so that the glass transition temperature of the acrylic polyol is within a range to be described later. For example, the content ratio of the aromatic vinyl monomer is, for example, 1 part by mass or more, preferably 20 parts by mass or more, and for example, 50 parts by mass or less, preferably 40 parts by mass or less with respect to 100 parts by mass of the total amount of the monomer composition.

Then, the acrylic polyol can be obtained, for example, by blending a polymerization initiator into the above-described monomer composition in a solvent and polymerizing the monomer composition.

The solvent is not particularly limited, and an example thereof includes the above-described alkyl ester. As the solvent, preferably, an ethyl acetate is used.

The polymerization initiator is not particularly limited, and examples thereof include water-soluble initiators, oil-soluble initiators, and redox-based initiators, and preferably, a water-soluble initiator and an oil-soluble initiator are used.

Examples of the water-soluble initiator include persulfate, hydrogen peroxide, organic hydroperoxide, and 4,4'-azobis(4-cyanovaleric acid) acid.

Examples of the oil-soluble initiator include benzoyl peroxide and azobisisobutyronitrile.

These polymerization initiators may be used alone or in combination of two or more.

A mixing ratio of the polymerization initiator is appropriately set in accordance with its purpose and application.

A ratio of the polymerization initiator is, for example, 0.05 parts by mass or more, and for example, 10 parts by mass or less, preferably 5 parts by mass or less with respect to 100 parts by mass of the total amount of the monomer composition.

The polymerization conditions are appropriately set in accordance with its purpose and application.

A polymerization temperature is, for example, 30°C or more, preferably 50°C or more, and for example, 95°C or less, preferably 85°C or less under normal pressure.

Further, the polymerization time is, for example, 1 hour or more, preferably 2 hours or more, and for example, 30 hours or less, preferably 20 hours or less.

In addition, in the polymerization of the polymer composition, a known additive may be added from the viewpoint of improving production stability.

Examples of the additive include pH adjusting agents, metal ion sealing agents, molecular weight adjusting agents (chain transfer agent), and neutralizing agents.

An addition amount and the timing of addition of the additive are appropriately set in accordance with its purpose and application.

Thus, an acrylic polyol is obtained as a polymer of the monomer composition.

In addition, the acrylic polyol may be also obtained as a solution of the above-described solvent.

When the acrylic polyol is obtained as a solution, the solid content concentration of the solution is, for example, 3% by mass or more, preferably 5% by mass or more, and for example, below 100% by mass, preferably 90% by mass or less.

In addition, the glass transition temperature of the acrylic polyol (solid content) is, for example, -50° C or more, preferably -25°C or more, more preferably 0°C or more, further more preferably 20°C or more, particularly preferably 40°C or more from the viewpoint of blocking resistance of the polyurethane layer to be described later, and for example, 100°C or less, preferably 90°C or less, more preferably 80°C or less, further more preferably 70°C or less from the viewpoint of handleability and workability of the acrylic polyol.

The glass transition temperature of the acrylic polyol is calculated by a known method according to the formulation of the monomer composition and the FOX formula.

In addition, a number average molecular weight of the acrylic polyol (solid content) is, for example, 2000 or more, preferably 6000 or more, more preferably 10000 or more, and for example, 100000 or less, preferably 50000 or less, more preferably 20000 or less from the viewpoint of gas barrier properties, retort resistance, handleability, and workability.

Further, the number average molecular weight of the acrylic polyol is calculated as a molecular weight in terms of standard polystyrene by gel permeation chromatography (GPC).

Further, the polyol compound may contain another macropolyol and a low molecular weight polyol as optional components as long as it does not damage the excellent effect of the present invention.

The other macropolyol is a macropolyol excluding the acrylic polyol.

Examples of the other macropolyol include polyether polyols, polyester polyols, polycarbonate polyols, polyurethane polyols, epoxy polyols, vegetable oil polyols, polyolefin polyols, and polymerizable monomer-modified polyols.

These other macropolyols may be used alone or in combination of two or more.

The low molecular weight polyol is an organic compound having two or more hydroxyl groups in its molecule, and having a molecular weight of 50 or more, and 400 or less, preferably 300 or less.

Examples of the low molecular weight polyol include dihydric alcohols and trihydric alcohols. Examples of the dihydric alcohol include 1,2-ethylene glycol, 1,2-propylene glycol, 1,3-propanediol, 1,4-butanediol, 1,5-pentanediol, 1,6-hexanediol, and neopentyl glycol. Examples of the trihydric alcohol include glycerin and trimethylolpropane.

These low molecular weight polyols may be used alone or in combination of two or more.

The content ratio of the optional component is appropriately set in accordance with its purpose and application.

For example, the content ratio of the other macropolyol is, for example, below 50 parts by mass, preferably 40 parts by mass or less, more preferably 30 parts by mass or less, particularly preferably 0 parts by mass with respect to 100 parts by mass of the total amount of the polyol compound from the viewpoint of gas barrier properties.

In addition, the content ratio of the low molecular weight polyol is, for example, below 50 parts by mass, preferably 40 parts by mass or less, more preferably 30 parts by mass or less, particularly preferably 0 parts by mass with respect to 100 parts by mass of the total amount of the polyol compound from the viewpoint of adhesion.

In other words, the content ratio of the acrylic polyol is, for example, above 50 parts by mass, preferably 60 parts by mass or more, more preferably 70 parts by mass or more, particularly preferably 100 parts by mass with respect to 100 parts by mass of the total amount of the polyol compound.

In other words, the polyol component does not contain the other macropolyol and the low molecular weight polyol, and contains only the above-described acrylic polyol as an active component.

In addition, the polyol component may contain the organic solvent.

In other words, the above-described polyol compound can be diluted with the organic solvent.

Examples of the organic solvent include the above-described organic solvents. These organic solvents may be used alone or in combination of two or more.

As the organic solvent, preferably, an alkyl ester is used, more preferably, an ethyl acetate is used from the viewpoint of handleability and workability.

In addition, when the polyol component contains the organic solvent, the solid content concentration thereof is appropriately set in accordance with its purpose and application.

More specifically, the solid content concentration (content ratio of the polyol compound) of the polyol component is, for example, 5% by mass or more, preferably 10% by mass or more, and for example, 100% by mass or less, preferably 80% by mass or less.

Also, the coating composition may further contain an additive.

Examples of the additive include oxygen acids of phosphorus or derivatives thereof, silane coupling agents, antifoaming agents, epoxy resins, catalysts, coatability modifiers, leveling agents, stabilizers (antioxidant, ultraviolet absorber, etc.), plasticizers, surfactants, pigments, fillers, organic or inorganic fine particles, and anti-mold agents.

These additives may be used alone or in combination of two or more.

The additive may be, for example, added to any one of or both the polyisocyanate component and the polyol component, or may be blended separately from the polyisocyanate component and/or the polyol component.

A mixing amount of the additive is appropriately determined in accordance with its purpose and application.

In the coating composition, a content ratio of the polyisocyanate component and the polyol component is adjusted, for example, as an equivalent ratio (NCO/OH) of isocyanate groups of the polyisocyanate component to hydroxyl groups of the polyol component.

More specifically, the equivalent ratio (NCO/OH) of the isocyanate groups of the polyisocyanate component to the hydroxyl groups of the polyol component is, for example, 0.9 or more, preferably above 1.0, more preferably 1.1 or more, further more preferably 1.2 or more, even more preferably 2.0 or more, particularly preferably 2.5 or more from the viewpoint of gas barrier properties, and is, for example, 10.0 or less, preferably 8.0 or less, more preferably 6.5 or less, further more preferably 6.0 or less, even more preferably 5.0 or less, particularly preferably 4.5 or less from the viewpoint of retort resistance.

Further, the coating composition is prepared as, for example, a two component curable coating agent or a one component curable coating agent.

In the two component curable coating agent, the above-described polyol component is prepared as a main agent. Further, the above-described polyisocyanate component is prepared as a curing agent. Then, the main agent and the curing agent are blended at the above-described ratio in use.

An example of the one component curable coating agent includes a moisture curable adhesive which cures by moisture, vapor (amine vapor etc.), or the like. The one component curable coating agent contains, for example, a urethane prepolymer having an isocyanate group at its molecule terminal, which is obtained by reacting a polyisocyanate component with the above-described polyol component at the above-described ratio.

Then, the urethane prepolymer as a one component curable coating agent has the isocyanate group at its molecule terminal, and cures by reacting the isocyanate group with moisture, vapor (amine vapor etc.), or the like in the atmosphere.

Also, the coating agent preferably contains the above-described organic solvent.

As the organic solvent, from the viewpoint of handleability and workability, preferably, an alkyl ester is used, more preferably, an ethyl acetate is used.

As described above, the organic solvent may be blended into the polyisocyanate component and/or the polyol component or may be separately blended at the time of mixing the polyisocyanate component and the polyol component.

In the coating composition, the content ratio of the organic solvent is appropriately set so that the total amount of the solid content (resin solid content) of the polyisocyanate component and the polyol component is a predetermined ratio.

The solid content concentration of the coating composition (total amount of the polyisocyanate component and the polyol component, including the organic solvent when the organic solvent is separately blended at the time of mixing the polyisocyanate component and the polyol component) is, for example, 5% by mass or more, preferably 10% by mass or more, more preferably 20% by mass or more, and for example, 50% by mass or less, preferably 40% by mass or less, more preferably 30% by mass or less from the viewpoint of handleability and workability.

In the coating composition, the monomer composition which is a raw material of the acrylic polyol does not contain the (meth)acrylonitrile. Therefore, the above-described coating composition has excellent solubility with respect to the alkyl ester, and as a result, it has excellent handleability and workability.

Further, the above-described coating composition contains the aromatic ring-containing isocyanate as a polyisocyanate component. Further, the above-described coating composition contains the polymer of the monomer composition containing the hydroxyl group-containing polymerizable monomer and the carboxyl group-containing polymerizable monomer as an acrylic polyol.

Therefore, the above-described coating composition can obtain the laminate having excellent gas barrier properties and retort resistance (hot water resistance).

FIG. 1 shows a schematic view of a laminate film as a laminate obtained using the above-described coating composition.

A laminate film 1 includes a resin film 2, an inorganic thin film layer 3 disposed on one side in a thickness direction of the resin film 2, a polyurethane layer 4 disposed on one side in the thickness direction of the inorganic thin film layer 3, an adhesive layer 5 disposed on one side in the thickness direction of the polyurethane layer 4, and a sealant layer 6 disposed on one side in the thickness direction of the adhesive layer 5.

The laminate film 1 is formed, for example, by bonding a first film 10 including the resin film 2, the inorganic thin film layer 3, and the polyurethane layer 4 to a second film 11 including the sealant layer 6 via the adhesive layer 5.

The first film 10 is formed, for example, by laminating the polyurethane layer 4 on the surface of the inorganic thin film layer 3 laminated on the resin film 2.

An example of the resin film 2 includes a plastic film containing a thermoplastic resin.

Examples of the thermoplastic resin include polyolefin resins, polyester resins, polyamide resins, and polyvinyl resins.

These thermoplastic resins may be used alone or in combination of two or more.

As the thermoplastic resin, preferably, a polyolefin resin and a polyester resin are used.

In other words, the resin film 2 preferably contains the polyolefin resin and/or the polyester resin.

Examples of the polyolefin resin include polyethylene (PE), polypropylene (PP), and polyethylene/polypropylene copolymers (random copolymer/block copolymer). Examples of the polyester resin include polyethylene terephthalate (PET), polyethylene naphthalate (PEN), polybutylene terephthalate (PBT), and polylactic acid.

In addition, when the resin film 2 contains two or more kinds of thermoplastic resins, the resin film 2 may be a coextruded film, or may be a composite film in which a plurality of films of thermoplastic resins are attached.

Further, the resin film 2 may be subjected to a surface treatment if necessary. Examples of the surface treatment include a corona discharge treatment and a primer treatment.

Further, the resin film 2 may be an unstretched film, or may be a uniaxially or biaxially oriented film.

These resin films 2 may be used alone or in combination of two or more.

As the resin film 2, preferably, a plastic film made of a polyester resin and a plastic film made of a polyolefin resin are used, more preferably, a plastic film made of a polyester resin is used, further more preferably, a plastic film made of polyethylene terephthalate is used.

The thickness of the resin film 2 is not particularly limited, and is, for example, 5 µm or more, preferably 10 µm or more, and for example, 200 µm or less, preferably 100 µm or less.

The inorganic thin film layer 3 is disposed on one side in the thickness direction of the resin film 2, and more specifically, is laminated on the surface on one side of the resin film 2.

The inorganic thin film layer 3 is a thin film of an inorganic material.

Examples of the inorganic material include inorganic matters, inorganic oxides, and inorganic nitrogen oxides.

Examples of the inorganic matter include magnesium, calcium, barium, titanium, zirconium, aluminum, indium, silicon, germanium, and tin.

Examples of the inorganic oxide include magnesium oxide, titanium oxide, aluminum oxide, indium oxide, silicon oxide, and tin oxide.

An example of the inorganic nitrogen oxide includes silicon oxynitride.

These inorganic materials may be used alone or in combination of two or more.

As the inorganic material, from the viewpoint of gas barrier properties, preferably, aluminum, silicon, aluminum oxide, and silicon oxide are used, more preferably, aluminum oxide and silicon oxide are used.

In other words, the inorganic thin film layer 3 preferably contains aluminum oxide and/or silicon oxide.

The inorganic thin film layer 3 is formed on one surface of the resin film 2 by a known method.

Examples of a method for forming the inorganic thin film layer 3 include vapor deposition methods (vacuum vapor deposition method, EB vapor deposition method, etc.), sputtering methods, ion plating methods, lamination methods, and plasma gas phase growth methods (CVD method etc.).

As a method for forming the inorganic thin film layer 3, from the viewpoint of production efficiency, preferably, a vapor deposition method is used, more preferably, a vacuum vapor deposition method is used.

In other words, the inorganic thin film layer 3 is preferably an inorganic vapor deposition layer.

The thickness of the inorganic thin film layer 3 is not particularly limited, and is, for example, 1 nm or more, preferably 2 nm or more, and for example, 500 nm or less, preferably 300 nm or less.

Further, the total sum of the thickness of the resin film 2 and the thickness of the inorganic thin film layer 3 is, for example, 5 µm or more, preferably 10 µm or more, and for example, 200 µm or less, preferably 100 µm or less.

Further, a composite film in which the inorganic thin film layer 3 is laminated on the surface of the resin film 2 (hereinafter, may be referred to as a substrate film) can be obtained as a commercially available product.

Examples of the commercially available product include the Barrialox series (trade name, manufactured by TORAY ADVANCED FILM CO., LTD., alumina vapor deposition polyethylene terephthalate film) and TECHBARRIER (trade name, manufactured by Mitsubishi Chemical Corporation, silica vapor deposition polyethylene terephthalate film).

The polyurethane layer 4 includes a cured product of the above-described coating composition.

The polyurethane layer 4 is formed, for example, by coating the above-described coating composition onto the inorganic thin film layer 3 and drying and curing (aging).

More specifically, the polyisocyanate component (curing agent) and the polyol component (main agent) are blended at the above-described ratio, and a mixture thereof (coating composition) is coated onto the inorganic thin film layer 3.

A coating temperature of the coating composition is, for example, 5°C or more, preferably 10°C or more, and for example, 50°C or less, preferably 40°C or less.

Also, a coating amount of the coating composition is, for example, 0.1 g/m² or more, preferably 0.3 g/m² or more, and for example, 10 g/m² or less, preferably 5 g/m² or less.

Further, a drying temperature of the coating composition is, for example, 60°C or more, preferably 80°C or more, and for example, 200°C or less, preferably 150°C or less. Further, the drying time is, for example, 10 seconds or more, preferably 30 seconds or more, and for example, 1 hour or less, preferably 30 minutes or less.

Further, a curing temperature (aging temperature) is, for example, 5°C or more, preferably 10°C or more, and for example, 50°C or less, preferably 40°C or less. Further, the curing time is, for example, 10 hours or more, preferably 20 hours or more, and for example, 200 hours or less, preferably 100 hours or less.

Thus, the polyurethane layer 4 as a cured product of the coating composition is laminated on the inorganic thin film layer 3.

The thickness of the polyurethane layer 4 is not particularly limited, and is, for example, 5 µm or more, preferably 10 µm or more, and for example, 200 µm or less, preferably 100 µm or less.

Thus, the first film 10 including the resin film 2, the inorganic thin film layer 3, and the polyurethane layer 4 is obtained.

The thickness of the first film 10 is not particularly limited, and is, for example, 50 µm or more, preferably 100 µm or more, and for example, 2000 µm or less, preferably 1000 µm or less.

The second film 20 includes the sealant layer 6, and preferably consists of the sealant layer 6.

The sealant layer 6 is a heat sealing layer which imparts heat sealing properties to the laminate film 1.

An example of the sealant layer 6 includes a thermoplastic polyolefin film.

More specifically, examples of the thermoplastic polyolefin film include a polyethylene film and an unstretched polypropylene film (CPP film).

These thermoplastic polyolefin films may be used alone or in combination of two or more.

As the thermoplastic polyolefin film, preferably, an unstretched polypropylene film (CPP film) is used.

The thickness of the second film 20 (the sealant layer 6) is, for example, 10 µm or more, preferably 20 µm or more, and for example, 200 µm or less, preferably 150 µm or less.

Also, the second film 20 (the sealant layer 6) may be subjected to the surface treatment if necessary. Examples of the surface treatment include a corona discharge treatment and a primer treatment.

The adhesive layer 5 is a layer which is interposed between the polyurethane layer 4 of the first film 10 and the sealant layer 6 of the second film 20, and bonds the first film 10 to the second film 20.

The adhesive layer 5 is obtained by coating and drying a known laminate adhesive.

Examples of the laminate adhesive include polyolefin-based adhesives, acrylic adhesives, polyester-based adhesives, phenolic resin-based adhesives, epoxy-based adhesives, polyurethane-based adhesives, rubber-based adhesives, and silicone-based adhesives.

These laminate adhesives may be used alone or in combination of two or more.

Although the method for forming the adhesive layer 5 is not particularly limited, and a laminate adhesive is coated onto one surface in the thickness direction of the polyurethane layer 4 of the first film 10 and/or the other surface in the thickness direction of the sealant layer 6 of the second film 20, and the first film 10 and the second film 20 are bonded to each other to be dried and cured.

More specifically, for example, first, the laminate adhesive is coated onto one surface in the thickness direction of any one of the first film 10 and the second film 20.

Preferably, the laminate adhesive is coated onto one surface in the thickness direction of the first film 10 (that is, the surface of the polyurethane layer 4).

The coating temperature of the laminate adhesive is, for example, 35°C or more, preferably 40°C or more, and for example, 100°C or less, preferably 90°C or less, more preferably 85°C or less.

Also, the coating amount of the laminate adhesive is, for example, 0.5 g/m² or more, preferably 1 g/m² or more, and for example, 5 g/m² or less, preferably 4.5 g/m² or less.

In addition, as a lamination apparatus in which the laminate adhesive is used, any of a forward transfer-type coating apparatus and a reverse transfer-type coating apparatus (reverse coater) can be used.

Then, the coated surface thereof is attached to the other film (preferably, the second film 20), and cured (aged) under normal temperature or heating. The curing conditions of the laminate adhesive are appropriately set in accordance with its purpose and application.

Thus, the adhesive layer 5 is obtained as a cured product of the laminate adhesive.

The thickness of the adhesive layer 5 is, for example, 10 µm or more, preferably 20 µm or more, and for example, 200 µm or less, preferably 150 µm or less.

Then, the laminate film 1 including the resin film 2, the inorganic thin film layer 3 disposed on one side in the thickness direction of the resin film 2, the polyurethane layer 4 disposed on one side in the thickness direction of the inorganic thin film layer 3, the adhesive layer 5 disposed on one side in the thickness direction of the polyurethane layer 4, and the sealant layer 6 disposed on one side in the thickness direction of the adhesive layer 5 is obtained.

The thickness of the laminate film 1 is, for example, 20 µm or more, preferably 30 µm or more, and for example, 180 µm or less, preferably 150 µm or less.

Then, since the laminate film 1 is obtained using the above-described coating composition, it is obtained with excellent workability, and also has excellent gas barrier properties and retort resistance.

Therefore, the laminate film 1 is preferably used as a packaging material in various industrial fields such as food, beverage, medicine and quasi-drug.

### Examples

Next, the present invention is described based on Examples and Comparative Examples. The present invention is however not limited by the following Examples. All designations of "part" or "parts" and "%" mean part or parts by mass and % by mass, respectively, unless otherwise particularly specified in the following description. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

### Example 1

An acrylic polyol was prepared in the formulation described in Table 1.

That is, a monomer composition prepared in the formulation described in Table 1 was dispersed in an ethyl acetate, and 1.0 part by mass of azobisisobutyronitrile (AIBN) as a polymerization initiator was added and the monomer composition reacted at 60°C for 10 hours. Thus, an acrylic polyol (polyol compound) was obtained.

Further, in this way, an ethyl acetate solution of the acrylic polyol (polyol component (hereinafter, referred to as an acrylic polyol solution)) was obtained.

Next, the ethyl acetate was further added to the acrylic polyol solution, and the solid content concentration of the mixture was adjusted to 50%.

The glass transition temperature (Tg) of the obtained acrylic polyol was calculated by the formulation of the monomer composition and the FOX formula. Further, the number average molecular weight (Mn) of the acrylic polyol was calculated as the molecular weight in terms of standard polystyrene by gel permeation chromatography.

Then, 0.5 g of the obtained acrylic polyol solution (solid content concentration of 50%) and 8.5 g of ethyl acetate were mixed, and thereafter, 1.0 g of TAKENATE D-110N (manufactured by Mitsui Chemicals, Inc., trimethylolpropane adduct of XDI (isocyanate compound), solid content concentration of 75%, ethyl acetate solution (polyisocyanate component)) was mixed thereto, thereby preparing a transparent coating composition.

On the other hand, an alumina vapor deposition PET film (alumina vapor deposition polyethylene terephthalate film) was prepared as a substrate film including a resin film and an inorganic thin film layer.

Next, the above-described coating composition was coated onto the inorganic thin film layer (alumina-side) so as to have a dry thickness of 0.5 g/m² using a bar coater, and the coated product was put into a drying oven set at 110°C and dried for one minute to be cured at 40°C for two days.

Thus, a polyurethane layer was formed.

Then, a mixture (TAKELAC A-310/ TAKENATE A-3= 10/1 (mass ratio)) of TAKELAC A-310 (manufactured by Mitsui Chemicals, Inc.) and TAKENATE A-3 (manufactured by Mitsui Chemicals, Inc.) as an adhesive for dry lamination was coated onto the polyurethane layer so as to have a dry thickness of 3 g/m² using a bar coater, and dried with a dryer.

Thereafter, an unstretched polypropylene film (TOHCELLO CP RXC-22 (CPP film, #60), manufactured by Mitsui Chemicals Tohcello, Inc.) as a sealant layer was laminated on the surface of the adhesive and cured at 40°C for three days.

Thus, a laminate film as a laminate was obtained.

### Examples 2, 6, and 8 to 13 and Comparative Examples 1, 2, and 5

An acrylic polyol solution (solid content concentration of 50%) was prepared in the formulations described in Tables 1 to 3. Further, 0.7 g of acrylic polyol solution (solid content concentration of 50%) and 8.4 g of ethyl acetate were mixed, and thereafter, 0.9 g of TAKENATE D-110N (manufactured by Mitsui Chemicals, Inc., trimethylolpropane adduct of XDI, solid content concentration of 75%, ethyl acetate solution) was mixed thereto. Otherwise, a coating composition and a laminate film were obtained in the same manner as in Example 1.

### Example 3

An acrylic polyol solution (solid content concentration of 50%) was prepared in the formulation described in Table 1. Further, 1.0 g of acrylic polyol solution (solid content concentration of 50%) and 8.3 g of ethyl acetate were mixed, and thereafter, 0.7 g of TAKENATE D-110N (manufactured by Mitsui Chemicals, Inc., trimethylolpropane adduct of XDI, solid content concentration of 75%, ethyl acetate solution) was mixed thereto. Otherwise, a coating composition and a laminate film were obtained in the same manner as in Example 1.

### Example 4

An acrylic polyol solution (solid content concentration of 50%) was prepared in the formulation described in Table 1. Further, 1.3 g of acrylic polyol solution (solid content concentration of 50%) and 8.2 g of ethyl acetate were mixed, and thereafter, 0.5 g of TAKENATE D-110N (manufactured by Mitsui Chemicals, Inc., trimethylolpropane adduct of XDI, solid content concentration of 75%, ethyl acetate solution) was mixed thereto. Otherwise, a coating composition and a laminate film were obtained in the same manner as in Example 1.

### Example 5

An acrylic polyol solution (solid content concentration of 50%) was prepared in the formulation described in Table 1. Further, 1.0 g of acrylic polyol solution (solid content concentration of 50%) and 8.3 g of ethyl acetate were mixed, and thereafter, 0.7 g of TAKENATE D-110N (manufactured by Mitsui Chemicals, Inc., trimethylolpropane adduct of XDI, solid content concentration of 75%, ethyl acetate solution) was mixed thereto. Otherwise, a coating composition and a laminate film were obtained in the same manner as in Example 1.

### Example 7

An acrylic polyol solution (solid content concentration of 50%) was prepared in the formulation described in Table 1. Further, 0.9 g of acrylic polyol solution (solid content concentration of 50%) and 8.4 g of ethyl acetate were mixed, and thereafter, 0.7 g of TAKENATE D-110N (manufactured by Mitsui Chemicals, Inc., trimethylolpropane adduct of XDI, solid content concentration of 75%, ethyl acetate solution) was mixed thereto. Otherwise, a coating composition and a laminate film were obtained in the same manner as in Example 1.

### Example 14

An acrylic polyol solution (solid content concentration of 50%) was prepared in the formulation described in Table 2. Further, 0.5 g of acrylic polyol solution (solid content concentration of 50%) and 8.4 g of ethyl acetate were mixed, and thereafter, 0.7 g of TAKENATE D-110N (manufactured by Mitsui Chemicals, Inc., trimethylolpropane adduct of XDI, solid content concentration of 75%, ethyl acetate solution) and 0.2 g of TAKENATE T-50 (manufactured by Mitsui Chemicals, Inc., XDI monomer) were mixed thereto. Otherwise, a coating composition and a laminate film were obtained in the same manner as in Example 1.

### Example 15

An acrylic polyol solution (solid content concentration of 50%) was prepared in the formulation described in Table 2. Further, 0.7 g of acrylic polyol solution (solid content concentration of 50%) and 8.4 g of ethyl acetate were mixed, and thereafter, 0.9 g of TAKENATE D-131N (manufactured by Mitsui Chemicals, Inc., isocyanurate modified product of XDI, solid content concentration of 75%, ethyl acetate solution) was mixed thereto. Otherwise, a coating composition and a laminate film were obtained in the same manner as in Example 1.

### Example 16

An acrylic polyol solution (solid content concentration of 50%) was prepared in the formulation described in Table 2. Further, 0.7 g of acrylic polyol solution (solid content concentration of 50%) and 8.5 g of ethyl acetate were mixed, and thereafter, 0.8 g of TAKENATE D-103H (manufactured by Mitsui Chemicals, Inc., trimethylolpropane adduct of TDI, solid content concentration of 75%, ethyl acetate solution) was mixed thereto. Otherwise, a coating composition and a laminate film were obtained in the same manner as in Example 1.

### Comparative Examples 3 and 4

An acrylic polyol solution (solid content concentration of 50%) was prepared in the formulation described in Table 3.

However, when 0.7 g of acrylic polyol solution (solid content concentration of 50%) and 8.4 g of ethyl acetate were mixed, the acrylic polyol was not dissolved in the ethyl acetate, and a coating composition could not be obtained.

### Comparative Example 6

An acrylic polyol solution (solid content concentration of 50%) was prepared in the formulation described in Table 3. Further, 0.7 g of acrylic polyol solution (solid content concentration of 50%) and 8.4 g of ethyl acetate were mixed, and thereafter, 0.9 g of TAKENATE D-160 (manufactured by Mitsui Chemicals, Inc., trimethylolpropane adduct of HDI, solid content concentration of 75%, ethyl acetate solution) was mixed thereto. Otherwise, a coating composition and a laminate film were obtained in the same manner as in Example 1.

### Example 17 and Comparative Examples 7 to 10

A coating composition and a laminate film were obtained in the same manner as in Example 2, and Comparative Examples 1 to 2 and 5 to 6, except that as a substrate film, a silica vapor deposition PET film (silica vapor deposition polyethylene terephthalate film) was used instead of the alumina vapor deposition PET film (alumina vapor deposition polyethylene terephthalate film).

### Example 18 and Comparative Examples 11 to 14

A coating composition and a laminate film were obtained in the same manner as in Example 2, and Comparative Examples 1 to 2 and 5 to 6, except that as a substrate film, a silica vapor deposition BOPP film (silica vapor deposition biaxially oriented polypropylene film) was used instead of the alumina vapor deposition PET film (alumina vapor deposition polyethylene terephthalate film).

### <Evaluation>

### (1) Retort Treatment

A laminate film was subjected to a hot water sterilization treatment (retort treatment) at 120°C for 30 minutes under pressure of 0.2 MPa.

### (2) Measurement of Oxygen Permeability

By using an oxygen permeation measuring device (OX-TRAN2/20, manufactured by AMETEK MOCON), an amount of oxygen permeation (OTR: cc/m^{2̇}·24 hr.atm) of each of the laminate films before and after the hot water sterilization treatment per m², day, and atmosphere at 20°C at relative humidity of 80% (80%RH) was measured.

Further, an OTR reduction rate due to the retort treatment was calculated from the amount of oxygen permeation before and after the retort treatment based on the following formula.

OTR reduction rate= amount of oxygen permeation before retort treatment/ amount of oxygen permeation after retort treatment.

### (3) Measurement of Adhesion (Laminate Strength)

The laminate strength (N) between the inorganic thin film layer and the polyurethane layer of each laminate film was measured by a T-shaped peel test (width of 15 mm) in conformity with JIS K 6854 (1999) at a peeling rate of 300 mm/min.

### (4) Blocking Properties

The polyurethane layer and the resin film were brought into contact with each other (area of 20 cm²) and stored at 40°C for 24 hours.

Next, the polyurethane layer and the resin film were peeled in a shear direction at a rate of 300 mm/min with a tensile tester.

The blocking properties were evaluated based on the following criteria.
Excellent: the strength was 1 N or less.
Good: the strength was 1 N or more, and it was easily peeled by hand.
Bad: the strength was 2 N or more.

### [Table 1]

**Table 1**

| No. | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Acrylic Polyol | Monomer Composition (parts by mass) | AA | 1.9 | 1.9 | 1.9 | 1.9 | 0.7 | 0.7 | 0.7 | 0.7 | 0.7 | 0.7 |
| | | St | 35 | 35 | 35 | 35 | 30 | 34 | 32.2 | 35 | 35 | 30 |
| | | MMA | 42.1 | 42.1 | 42.1 | 42.1 | 50.8 | 42 | 42 | 34.6 | 43.3 | 48.8 |
| | | BA | 1 | 1 | 1 | 1 | 8.5 | 0.8 | 0.1 | 7.3 | 1 | 0.5 |
| | | AN | - | - | - | - | - | - | - | - | - | - |
| | | HEA | 20 | 20 | 20 | 20 | 10 | 22.5 | 25 | - | 20 | 20 |
| | | HEMA | - | - | - | - | - | - | - | 22.4 | - | - |
| | HEA,HEMA/AA (mass ratio) | | 0.095 | 0.095 | 0.095 | 0.095 | 0.070 | 0.031 | 0.028 | 0.031 | 0.035 | 0.035 |
| | Tg (°C) | | 63.7 | 63.7 | 63.7 | 63.7 | 65 | 60 | 57 | 64 | 63.7 | 65 |
| | Mn | | 15000 | 15000 | 15000 | 15000 | 12000 | 16800 | 18400 | 17100 | 11500 | 15250 |
| Polyisocyanate Component | | | D-110N | D-110N | D-110N | D-110N | D-110N | D-110N | D-110N | D-110N | D-110N | D-110N |
| R (NCO/OH) | | | 6.3 | 4.2 | 2.1 | 1.1 | 4.2 | 4.2 | 4.2 | 4.2 | 4.2 | 4.2 |
| Substrate Film | | | AlOxPET | AlOxPET | AlOxPET | AlOxPET | AlOxPET | AlOxPET | AlOxPET | AlOxPET | AlOxPET | AlOxPET |
| Solubility (Ethyl Acetate) | | | Excellent | Excellent | Excellent | Excellent | Excellent | Excellent | Slight Turbidity | Excellent | Excellent | Excellent |
| Blocking Properties | | | Excellent | Excellent | Excellent | Excellent | Excellent | Excellent | Excellent | Excellent | Excellent | Excellent |
| Before Retort | Adhesive Strength (N) | | 1.9 | 2.0 | 2.2 | 2.1 | 1.8 | 2.0 | 2.0 | 2.1 | 1.8 | 1.7 |
| | OTR (cc/m²·24hrs·atm) | | 0.5 | 0.5 | 0.6 | 0.8 | 1.0 | 0.5 | 0.5 | 0.9 | 0.5 | 0.5 |
| After Retort | Adhesive Strength (N) | | MF | MF | MF | MF | MF | MF | MF | MF | MF | MF |
| | OTR (cc/m²·24hrs·atm) | | 0.7 | 0.6 | 0.7 | 0.9 | 1.4 | 0.6 | 0.6 | 1.2 | 0.6 | 0.6 |
| OTR Reduction Rate Before and After Retort | | | 1.40 | 1.20 | 1.17 | 1.13 | 1.40 | 1.20 | 1.20 | 1.33 | 1.20 | 1.20 |

**Table 2**

| No. | | | Ex. 11 | Ex. 12 | Ex. 13 | Ex. 14 | Ex. 15 | Ex. 16 | Ex. 17 | Ex. 18 |
|---|---|---|---|---|---|---|---|---|---|---|
| Acrylic Polyol | Monomer Composition (parts by mass) | AA | 1.9 | 0.7 | 0.7 | 1.9 | 1.9 | 1.9 | 1.9 | 1.9 |
| | | St | 10 | - | 35 | 35 | 35 | 35 | 35 | 35 |
| | | MMA | 10 | 35 | - | 42.1 | 42.1 | 42.1 | 42.1 | 42.1 |
| | | BA | 58.1 | 44.3 | 44.3 | 1 | 1 | 1 | 1 | 1 |
| | | AN | - | - | - | - | - | - | - | - |
| | | HEA | 20 | 20 | 20 | 20 | 20 | 20 | 20 | 20 |
| | | HEMA | - | - | - | - | - | - | - | - |
| | HEA, HEMA/AA (mass ratio) | | 0.095 | 0.035 | 0.035 | 0.095 | 0.095 | 0.095 | 0.095 | 0.095 |
| | Tg (°C) | | -28.8 | -5.1 | 6.0 | 63.7 | 63.7 | 63.7 | 63.7 | 63.7 |
| | Mn | | 11570 | 13000 | 14200 | 15000 | 15000 | 15000 | 7550 | 7550 |
| Polyisocyanate Component | | | D-110N | D-110N | D-110N | D-110N + T-50 | D-131N | D-103H | D-110N | D-110N |
| R (NCO/OH) | | | 4.2 | 4.2 | 4.2 | 4.2 | 4.2 | 4.2 | 4.2 | 4.2 |
| Substrate Film | | | AlOxPET | AlOxPET | AlOxPET | AlOxPET | AlOxPET | AlOxPET | SiOxPET | SiOxBOPP |
| Solubility (Ethyl Acetate) | | | Excellent | Excellent | Excellent | Excellent | Excellent | Excellent | Excellent | Excellent |
| Blocking Properties | | | Bad | Good | Good | Good | Excellent | Excellent | Excellent | Excellent |
| Before Retort | Adhesive Strength (N) | | MF | MF | MF | MF | 1.8 | 1.2 | 2.0 | 0.4 |
| | OTR (cc/m²·24hrs·atm) | | 1.1 | 1.0 | 1.0 | 0.5 | 0.5 | 1.0 | 0.5 | 2.8 |
| After Retort | Adhesive Strength (N) | | MF | MF | MF | MF | MF | MF | MF | MF |
| | OTR (cc/m²·24hrs·atm) | | 1.6 | 1.5 | 1.5 | 0.6 | 0.6 | 1.2 | 0.5 | 3 |
| OTR Reduction Rate Before and After Retort | | | 1.42 | 1.50 | 1.50 | 1.20 | 1.20 | 1.20 | 1.00 | 1.07 |

**Table 3**

| No. | | | Comparative Ex. 1 | Comparative Ex. 2 | Comparative Ex. 3 | Comparative Ex. 4 | Comparative Ex. 5 | Comparative Ex. 6 |
|---|---|---|---|---|---|---|---|---|
| Acrylic Polyol | Monomer Composition (parts by mass) | AA | - | - | - | 1 | - | 1.9 |
| | | St | - | - | - | - | 35 | 35 |
| | | MMA | 79 | 79 | 30 | 40 | 31 | 42.1 |
| | | BA | - | - | - | - | 11.6 | 1 |
| | | AN | - | - | 20 | 49 | - | - |
| | | HEA | 21 | - | - | - | - | 20 |
| | | HEMA | - | 21 | 50 | 10 | 22.4 | - |
| | HEA,HEMA/AA (mass ratio) | | 0.000 | 0.000 | 0.000 | 0.000 | 0.000 | 0.095 |
| | Tg (°C) | | 65.3 | 94.4 | - | - | 65 | 63.7 |
| | Mn | | 16260 | 12100 | - | - | 11340 | 15000 |
| Polyisocyanate Component | | | D-110N | D-110N | D-110N | D-110N | D-110N | D-160 |
| R (NCO/OH) | | | 4.2 | 4.2 | 4.2 | 4.2 | 4.2 | 4.2 |
| Substrate Film | | | AlOxPET | AlOxPET | - | - | AlOxPET | AlOxPET |
| Solubility (Ethyl Acetate) | | | Excellent | Excellent | Insoluble | Insoluble | Excellent | Excellent |
| Blocking Properties | | | Excellent | Excellent | - | - | Excellent | Excellent |
| Before Retort | Adhesive Strength (N) | | 1.1 | 1.2 | - | - | MF | MF |
| | OTR (cc/m²·24hrs·atm) | | 0.6 | 0.7 | - | - | 0.7 | 3.1 |
| After Retort | Adhesive Strength (N) | | MF | MF | - | - | MF | MF |
| | OTR (cc/m²·24hrs·atm) | | 1.5 | 2.4 | - | - | 1.4 | 4.5 |
| OTR Reduction Rate Before and After Retort | | | 2.50 | 3.43 | - | - | 2.03 | 1.45 |

**Table 4**

| No. | | | Comparative Ex. 7 | Comparative Ex. 8 | Comparative Ex. 9 | Comparative Ex. 10 | Comparative Ex. 11 | Comparative Ex. 12 | Comparative Ex. 13 | Comparative Ex. 14 |
|---|---|---|---|---|---|---|---|---|---|---|
| Acrylic Polyol | Monomer Composition (parts by mass) | AA | - | - | - | 1.9 | - | - | - | 1.9 |
| | | St | - | - | 35 | 35 | - | - | 35 | 35 |
| | | MMA | 79 | 79 | 31 | 42.1 | 79 | 79 | 31 | 42.1 |
| | | BA | - | - | 11.6 | 1 | - | - | 11.6 | 1 |
| | | AN | - | - | - | - | - | - | - | - |
| | | HEA | 21 | - | - | 20 | 21 | - | - | 20 |
| | | HEMA | - | 21 | 22.4 | - | - | 21 | 22.4 | - |
| | HEA,HEMA/AA (mass ratio) | | 0.000 | 0.000 | 0.000 | 0.095 | 0.000 | 0.000 | 0.000 | 0.095 |
| | Tg (°C) | | 65.3 | 94.4 | 65 | 63.7 | 65.3 | 94.4 | 65 | 63.7 |
| | Mn | | 16260 | 12100 | 11340 | 15000 | 16260 | 12100 | 11340 | 15000 |
| Polyisocyanate Component | | | XDI-TMP | XDI-TMP | XDI-TMP | HDI-TMP | XDI-TMP | XDI-TMP | XDI-TMP | HDI-TMP |
| R (NCO/OH) | | | 4.2 | 4.2 | 4.2 | 4.2 | 4.2 | 4.2 | 4.2 | 4.2 |
| Substrate Film | | | SiOxPET | SiOxPET | SiOxPET | SiOxPET | SiOxBOPP | SiOxBOPP | SiOxBOPP | SiOxBOPP |
| Solubility (Ethyl Acetate) | | | Excellent | Excellent | Excellent | Excellent | Excellent | Excellent | Excellent | Excellent |
| Blocking Properties | | | Excellent | Excellent | Excellent | Excellent | Excellent | Excellent | Excellent | Excellent |
| Before Retort | Adhesive Strength (N) | | 1.5 | 1.6 | MF | MF | 0.3 | 0.3 | MF | MF |
| | OTR (cc/m²·24hrs·atm) | | 0.6 | 0.6 | 0.7 | 3.1 | 3.0 | 3.0 | 3.5 | 5.8 |
| After Retort | Adhesive Strength (N) | | MF | MF | MF | MF | MF | MF | MF | MF |
| | OTR (cc/m²·24hrs·atm) | | 1.3 | 1.5 | 1.2 | 4.4 | 4.3 | 4.5 | 4.3 | 6.5 |
| OTR Reduction Rate Before and After Retort | | | 2.17 | 2.50 | 1.71 | 1.42 | 1.43 | 1.50 | 1.23 | 1.12 |

The details of abbreviations in Tables are described below.
AA: acrylic acid
St: styrene
MMA: methyl methacrylate
BA: n-butyl acrylate
AN: acrylonitrile
HEA: 2-hydroxyethyl acrylate
HEMA: 2-hydroxyethyl methacrylate
OTR: oxygen permeability
D-110N: TAKENATE D-110N, trimethylolpropane adduct of XDI, solid content concentration of 75%, ethyl acetate solution, manufactured by Mitsui Chemicals, Inc.
D-131N: TAKENATE D-131N, isocyanurate modified product of XDI, solid content concentration of 75%, ethyl acetate solution, manufactured by Mitsui Chemicals, Inc.
T-50: TAKENATE T-50, XDI monomer, manufactured by Mitsui Chemicals, Inc.
D-103H: TAKENATE D-103H, trimethylolpropane adduct of TDI, solid content concentration of 75%, ethyl acetate solution, manufactured by Mitsui Chemicals, Inc.
AlOxPET: alumina vapor deposition polyethylene terephthalate film
SiOxPET: silica vapor deposition polyethylene terephthalate film
SiOxBOPP: silica vapor deposition biaxially oriented polypropylene film
MF: substrate breakage (substrate film breakage)

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The coating composition and the laminate of the present invention are preferably used in the packaging material field of food, the packaging material field of beverage, the packaging material field of medicine, and the packaging material field of quasi-drug.

### Description of Reference Numerals

- 1: Laminate film
- 2: Resin film
- 3: Inorganic thin film layer
- 4: Polyurethane layer
- 5: Adhesive layer
- 6: Sealant layer

## Claims

1. A coating composition comprising:
a polyisocyanate component and a polyol component, wherein
the polyisocyanate component includes an aromatic ring-containing isocyanate,
the polyol component includes an acrylic polyol, and
the acrylic polyol is a polymer of a monomer composition containing a hydroxyl group-containing polymerizable monomer and a carboxyl group-containing polymerizable monomer and containing no (meth)acrylonitrile.

2. The coating composition according to claim 1, wherein
the aromatic ring-containing isocyanate includes a xylylene diisocyanate and/or a derivative of the xylylene diisocyanate.

3. The coating composition according to claim 1, wherein
the monomer composition includes an aromatic vinyl monomer.

4. The coating composition according to claim 1, wherein
an equivalent ratio (NCO/OH) of isocyanate groups of the polyisocyanate component to hydroxyl groups of the polyol component is 1.2 or more and 6.0 or less.

5. The coating composition according to claim 1, wherein
in the monomer composition, a mass ratio (carboxy group-containing monomer/hydroxyl group-containing monomer) of the carboxy group-containing monomer content to the hydroxyl group-containing monomer content is 0.03 or more and 0.1 or less.

6. The coating composition according to claim 1, wherein
a content ratio of the carboxy group-containing monomer is 0.1 parts by mass or more and 5.0 parts by mass or less with respect to 100 parts by mass of the total amount of the monomer composition.

7. The coating composition according to claim 1, wherein
a glass transition temperature of the acrylic polyol is -25°C or more and 80°C or less.

8. The coating composition according to claim 1, wherein
a number average molecular weight of the acrylic polyol is 6000 or more.

9. A laminate comprising:
a resin film,
an inorganic thin film layer disposed on one side in a thickness direction of the resin film,
a polyurethane layer disposed on one side in the thickness direction of the inorganic thin film layer,
an adhesive layer disposed on one side in the thickness direction of the polyurethane layer, and
a sealant layer disposed on one side in the thickness direction of the adhesive layer, wherein
the polyurethane layer includes a cured product of the coating composition according to claim 1.

10. The laminate according to claim 9, wherein
the inorganic thin film layer includes aluminum oxide and/or silicon oxide.

11. The laminate according to claim 9, wherein
the resin film includes a polyester resin and/or a polyolefin resin.
